# EUROPEAN PATENT APPLICATION

(11) **EP 2 166 753 A1**
(43) Date of publication of application: **24.03.2010**
(21) Application number: 08790099.9
(22) Date of filing: 30.06.2008
(51) Int. Cl.: H04N 5/45

(54) **VIDEO DISPLAY DEVICE**

(30) Priority: 04.07.2007 JP 2007175823
(71) Applicant: Panasonic Corporation, Kadoma-shi Osaka 571-8501 (JP)
(72) Inventor: OHDACHI, Eriko, Chuo-ku Osaka 540-6207 (JP); MIZUGUCHI, Yuji, Chuo-ku Osaka 540-6207 (JP)
(74) Representative: Grünecker, Kinkeldey, Stockmair & Schwanhäusser Anwaltssozietät
(86) International application number: PCT/JP2008/001700
(87) International publication number: WO 2009/004784

(57) **Abstract**

A video display device providing viewers with operation adaptable to any of various viewing environments. The video display device (1) comprises a display section (12) for displaying a single content to at least two viewers in a one-screen display mode or two different contents to the respective viewers in a two-screen display mode and a control section (14) for giving an instruction of video processing of a single content being currently displayed on the display section (12) when one of the viewers operates a button installed for the viewer in the one-screen display mode and giving an instruction of video processing of only the content displayed for the viewer who operates a button installed for the viewer out of the two contents being currently displayed on the display section in the two-screen display mode.

## Description

### Technical Field

The present invention relates to an image display apparatus. More particularly, the present invention relates to an image display apparatus with a large screen having a display aspect ratio greater than 16:9.

### Background Art

Recently, image display apparatuses as described above are being developed. Image display apparatuses of this type are expected to be used by viewers in the rear seats in the car compartment to enjoy video images.

The image display apparatus of this type is long in the horizontal direction, so that the image display apparatus can display a single video image to a plurality of viewers sitting in the rear seats or combine and display a plurality of different video images to a plurality of viewers (for example, see following Non-Patent Document 1).
Non-Patent Document 1: "Wide IPS liquid crystal module for cars has been developed" [online], Hitachi Displays, Ltd. July 25, 2006, searched on internet on June 26, 2007, <URL: http://www.hitachi-displays.com/news/2052306_16927.html>

### Disclosure of Invention

### Problems to be Solved by the Invention

Apart from image display apparatuses such as home television receivers, the image display apparatus of this type displays a single video image for a plurality of viewers, or synthesize and display a plurality of different video images for a plurality of viewers. That is, the image display apparatus of this type is used in various viewing environments. Therefore, it is necessary to prepare operations to support these viewing environments.

It is therefore an object of the present invention to provide an image display apparatus that can provide the operations to support various viewing environments to viewers.

### Means for Solving the Problem

To achieve the above object, the image display apparatus according to an aspect of the present invention has a display section that displays single content by single-screen display for at least two viewers or displays one of two different contents by dual-screen display for each viewers; and a controlling section that, during the single-screen display, when each viewer operates a button for each viewer, gives a command for video image processing for the single content that is currently displayed on the display section, and, during the dual-screen display, when each viewer operates a button for each of the viewers, gives a command for video image processing limited to one of the two contents that is currently displayed for the viewer that has operated the button.

### Advantageous Effects of Invention

As explained above, according to one aspect of the present invention, during single-screen display, the controlling section commands video image processing of single content that is being displayed, in response to operations of buttons for all viewers. During single-screen display, a plurality of viewers have an equal right to operate the screen. By contrast with this, during dual-screen display, the controlling section gives a command for video image processing limited to one of two contents that is currently displayed for a viewer that has operated a button, in response to the operation of the button for each viewer. That is, during dual-screen display, a viewer has a right to operate only the screen assigned to that viewer. Consequently, it is possible to provide an image display apparatus that can provide the operations to support various viewing environments to viewers.

### Brief Description of Drawings

FIG.1 is a block diagram showing a configuration of an image display apparatus 1 according to an embodiment of the present invention;
FIG.2 shows how an input image signal of each kind of an aspect ratio looks based on each screen size in single-screen display in a display section 12;
FIG.3 shows how an input image signal of each kind of an aspect ratio looks based on each screen size in dual-screen display in the display section 12;
FIG.4 shows a group of buttons as an example of an operating section 21;
Fig. is a flowchart showing the operation of the image display apparatus 1 in case where a left dual-screen on/off button 211L of a remote controller 2 is pressed;
FIG.6 is a schematic diagram showing a screen transition in case where single-screen setup is employed before the left dual-screen on/off button 211L is pressed;
FIG.7 is a schematic diagram showing a screen transition in case where dual-screen setup is employed before the left dual-screen on/off button 211L is pressed;
FIG.8 is a flowchart showing the operation of the image display apparatus 1 when a right dual-screen on/off button 211R of the remote controller 2 is pressed;
FIG.9 shows a screen transition in case where single-screen setup is employed before the right dual-screen on/off button 211R is pressed;
FIG.10 is a schematic diagram showing a screen transition in case where dual-screen setup is employed before the right dual-screen on/off button 211R is pressed;
FIG.11 is a flowchart showing the operation of the image display apparatus 1 in case where the left content button 212L of the remote controller 2 is pressed;
FIG.12 is a schematic diagram showing a screen transition in case where single-screen setup is employed before the left content button 212L is pressed;
FIG.13 is a schematic diagram showing a screen transition in case where dual-screen setup is employed before the left content button 212L is pressed;
FIG.14 is a flowchart showing a transition to the next input video image content (in case where OFF is not provided);
FIG.15 is a flowchart showing a transition to the next input video image content (in case where OFF is provided);
FIG.16 is a flowchart showing the operation of the image display apparatus 1 in case where the right content button 212R of the remote controller 2 is pressed;
FIG.17 is a schematic diagram showing a screen transition in case where single-screen setup is employed before the right content button 212R is pressed;
FIG.18 is a schematic diagram showing a screen transition in case where dual-screen setup is employed before the right content button 212R is pressed;
FIG.19 is a flowchart showing the operation of the image display apparatus 1 in case where the left-screen size switching button 213L of the remote controller 2 is pressed;
FIG.20 is a schematic diagram showing a screen transition in case where single-screen setup is employed before the left-screen size switching button 213L is pressed;
FIG.21 is a schematic diagram showing a screen transition in case where dual-screen setup is employed before the left-screen size switching button 213L is pressed;
FIG.22 is a schematic diagram showing the order of screen size change during single-screen display;
FIG.23 is a schematic diagram showing the order of screen size change during dual-screen display;
FIG.24 is a flowchart showing the operation of the image display apparatus 1 in case where the right-screen size switching button 213R of the remote controller 2 is pressed;
FIG.25 is a schematic diagram showing a screen transition in case where single-screen setup is employed before the right-screen size switching button 213R is pressed; and
FIG.26 is a schematic diagram showing a screen transition in case where dual-screen setup is employed before the right-screen size switching button 213R is pressed.

### Best Mode for Carrying Out the Invention

An image display apparatus according to an embodiment of the present invention will be explained below using the accompanying drawings.

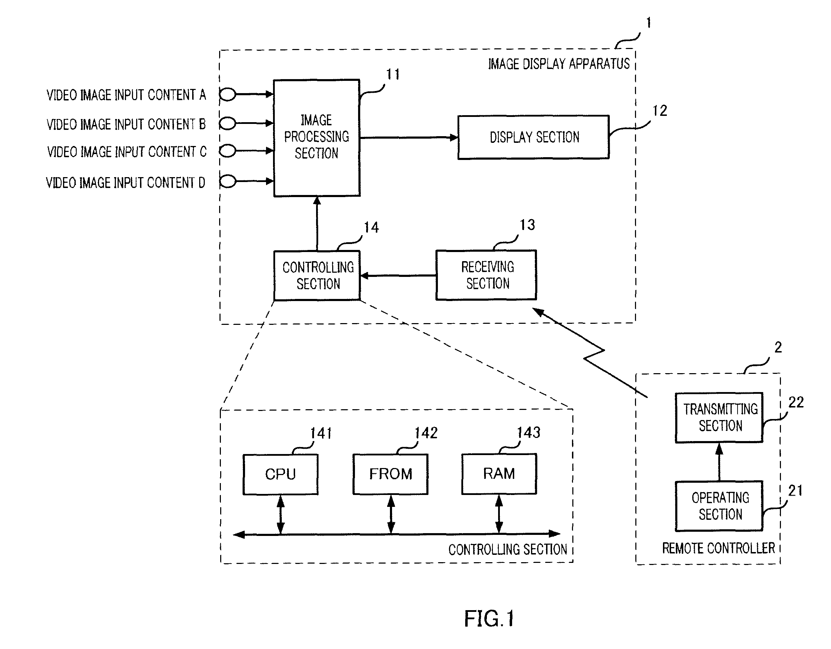

FIG.1 is a block diagram showing a configuration of the image display apparatus 1 according to an embodiment of the present invention. Further, FIG.1 shows a remote controller 2 that functions with the image display apparatus 1.

In FIG.1, the image display apparatus 1 displays one input image signal by single-screen display or displays two input image signals by dual-screen display, depending on an operation command from the remote controller 2.

Further, the remote controller 2 allows viewers to operate the image display apparatus 1 from remote locations. Note that, although the present embodiment will be explained assuming that the image display apparatus 1 is remotely controlled by the remote controller 2, the image display apparatus 1 may be operated via a touch panel constituting the image display apparatus 1 or an ESW (Escutcheon SWitch). In case of a touch panel, the buttons explained later may be read as software switches that are superimposed and displayed on the screen of a display screen 12 (described later), and, in case of an ESW, the buttons may be read as hardware switches arranged in an outer body of the image display apparatus 1, so that one of ordinary skill in the art would have readily made the image display apparatus 1 according to the present invention.

Next, the specific configuration of the remote controller 2 will be explained. The remote controller 2 has an operating section 21 that transforms operations by the viewer into operation commands, and a transmitting section 22 that transforms operation commands generated in the operating section 21, into radio signals such as infrared signals, and transmits the signals to the image display apparatus 1.

Next, the configuration of the image display apparatus 1 will be explained. The image display apparatus 1 has an image processing section 11, a display section 12, a receiving section 13 and a controlling section 14.

The image processing section 11 is typically configured with hardware circuitry, and receives as input a plurality of video image signals (four video image signals are shown) through a plurality of input terminals (four terminals are shown). The image processing section 11 selects one or two of a plurality of input video image signals and performs image expansion and/or synthesis processing with respect to the selected video image signals, and outputs the video image signals after processing, to the display section 12.

The display section 12 is formed with, for example, a liquid crystal display. To be more specific, the display section 12 has a display aspect ratio greater than 16:9. Further, to be more specific, the display section 12 will be explained assuming that the display section 12 has square pixels of 1600 dots in the horizontal direction and 480 dots in the vertical direction and has a wide shape. This display section 12 displays output video image signals from the image processing section 11.

The receiving section 13 is typically configured with hardware circuitry, and receives radio signals from the remote controller 2 and extracts and gives operation commands to the controlling section 14.

The controlling section 14 is formed with a CPU 141, a flash ROM (FROM) 142 and a RAM 143, and, when the CPU 141 executes the control program stored in the flash ROM 142 using the RAM 143, gives an instruction (i.e. control command) as to which video image signals to select and an instruction (i.e. control command) as to the extension rate and/or synthesizing method, to the image processing section 11 according to the operation command received from the receiving section 13.

To be more specific, the image display apparatus 1 receives as input a plurality of video image signals from a plurality of external devices, and supplies these signals to the image processing section 11. The video image signals from external devices may be stored in a recording medium such as DVD (Digital Versatile Disc), transmitted from broadcasting devices for terrestrial digital broadcasting or satellite digital broadcasting or transmitted from a camera or car navigation system. Hereinafter, these video image signals will be referred to as "contents," and assume that, with the example of FIG. 1, four contents A, B, C and D are supplied to the image display apparatus 1.

Further, although the image display apparatus 1 of the present invention enables dual-screen display, if viewers want to view two programs of output video image signals from broadcasting devices, it is necessary to provide video image signals of each program, from two broadcasting devices (i.e. tuners) to the image display apparatus 1 as separate contents.

The image display apparatus 1 of the present invention can extend input video image signals in the horizontal direction and the vertical direction and display these input video image signals, and, in the image display apparatus 1 of the present invention, a plurality of setting values of extension rates in each direction are prepared for single-screen display in advance and a plurality of setting values of extension rates in both horizontal and vertical directions of two screens are prepared for dual-screen display in advance. Hereinafter, this setting value will be referred to as "screen size." The viewer operates the operating section 21 to change this screen size.

Here, table 1 shows kinds of the screen size and extension rates of each screen size in the horizontal direction and the vertical direction in case of single-screen display and table 2 shows kinds of the screen size and extension rates in case of dual-screen display.

**[Table 1]**

| Screen Size | Horizontal Extension Rate | Vertical Extension Rate |
|---|---|---|
| Normal | 1.00× magnification | 1.00× magnification |
| Wide | 1.33 magnification, | 1.00× magnification |
| Super Wide | 2.00× magnification | 1.00× magnification |
| Ultra Wide | 2.50× magnification | 1.00× magnification |
| Ultra Zoom | 2.50× magnification | 1.33× magnification |
| Super Zoom | 2.00× magnification | 1.33× magnification |
| Zoom | 1.33× magnification, | 1.33× magnification |

**[Table 2]**

| Screen Size | Horizontal Extension Rate | Vertical Extension Rate |
|---|---|---|
| Normal | 1.00× magnification | 1.00× magnification |
| Wide | 1.25× magnification | 1.00× magnification |
| Zoom | 1.25 × magnification | 1.33× magnification, |

As shown in the above table 1, "normal," "wide," "super wide," "ultra wide," "ultra zoom," "super zoom" and "zoom" are prepared for the image display apparatus 1 of the present invention as screen sizes in case of single-screen display. In normal, the horizontal extension rate is 1.00× magnification and the vertical extension rate is 1.00× magnification. Hereinafter, in wide, the horizontal extension rate is 1.33× magnification and the vertical extension rate is 1.00× magnification, in super wide, the horizontal extension rate is 2.00× magnification and the vertical extension rate is 1.00× magnification, in ultra wide, the horizontal extension rate is 2.50× magnification and the vertical extension rate is 1.00× magnification, in ultra zoom, the horizontal extension rate is 2.50× magnification and the vertical extension rate is 1.33× magnification, in super zoom, the horizontal extension rate is 2.00× magnification and the vertical extension rate is 1.33× magnification, and in zoom, the horizontal extension rate is 1.33× magnification and the vertical extension rate is 1.33× magnification.

Further, as shown in the above table 2, "normal," "wide" and "zoom" are prepared for the image display apparatus 1 of the present invention as screen sizes in case of dual-screen display. In normal, the horizontal extension rate is 1.00× magnification and the vertical extension rate is 1.00×magnification. Hereinafter, in wide, the horizontal extension rate is 1.25× magnification and the vertical extension rate is 1.00× magnification, and in zoom, the horizontal extension rate is 1.25× magnification and the vertical extension rate is 1.33× magnification. Further, in wide and zoom, the horizontal extension rate may be set to 1.33× magnification instead of 1.25× magnification. Note that, in this case, the video image extended in the horizontal direction by 1.33 magnification, may be adjusted to 800 pixels in the horizontal direction by cutting 25 dots each on the left and right sides of this image.

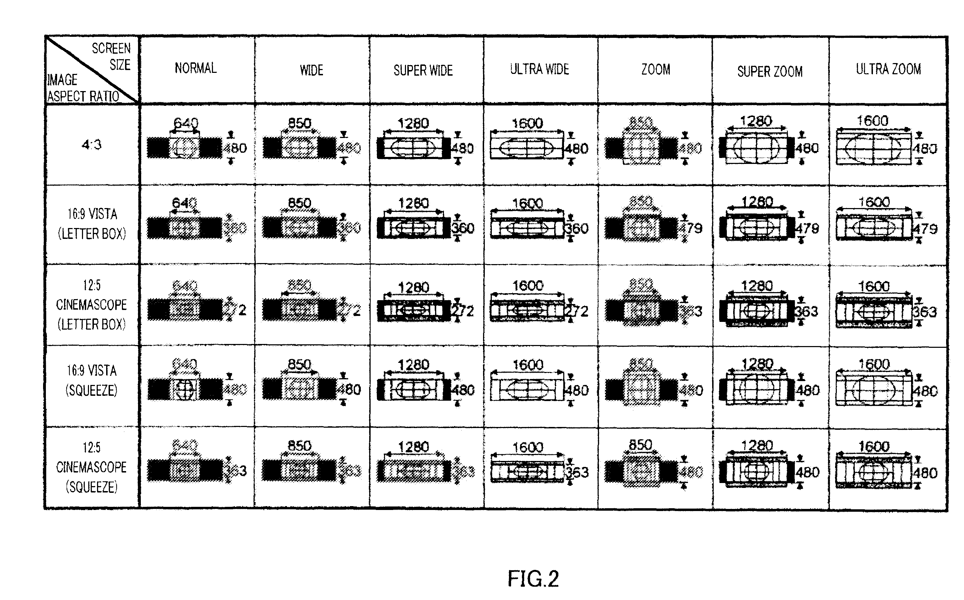

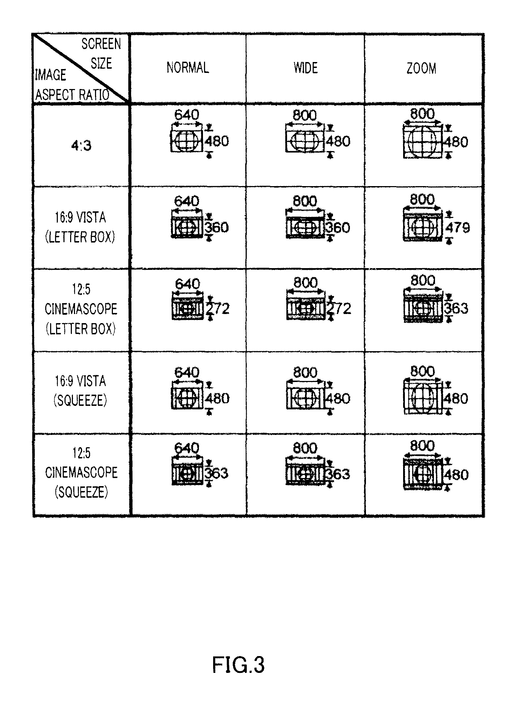

Here, there are various kinds of image aspect ratios of video image signals. Typical examples of image aspect ratios include 4:3, 16:9 vista (letter box), 12:5 CinemaScope (letter box), 16:9 vista (squeeze), and 12:5 (squeeze). Here, FIG.2 shows how an input video image signal of each kind of an aspect ratio looks based on each screen size in single-screen display in the display section 12, and FIG.3 shows how an input image signal of each kind of an aspect ratio looks based on each screen size in dual-screen display.

Further, when an input video image signal of 4:3 or 16:9 vista (squeeze) is ultra-zoomed, super-zoomed or zoomed, the upper end portion and the lower end portion of the original video image are cut after the screen size changes. The viewer needs to select the screen size taking this point into account. However, if aspect ratios of and the changed aspect ratio of input video image signals other than the above input video image signal do not match the above combination of the ratios, only black belt portions added to the original video image are cut. Accordingly, in this case, the viewer can select the screen size without worrying that the original video image portions are cut.

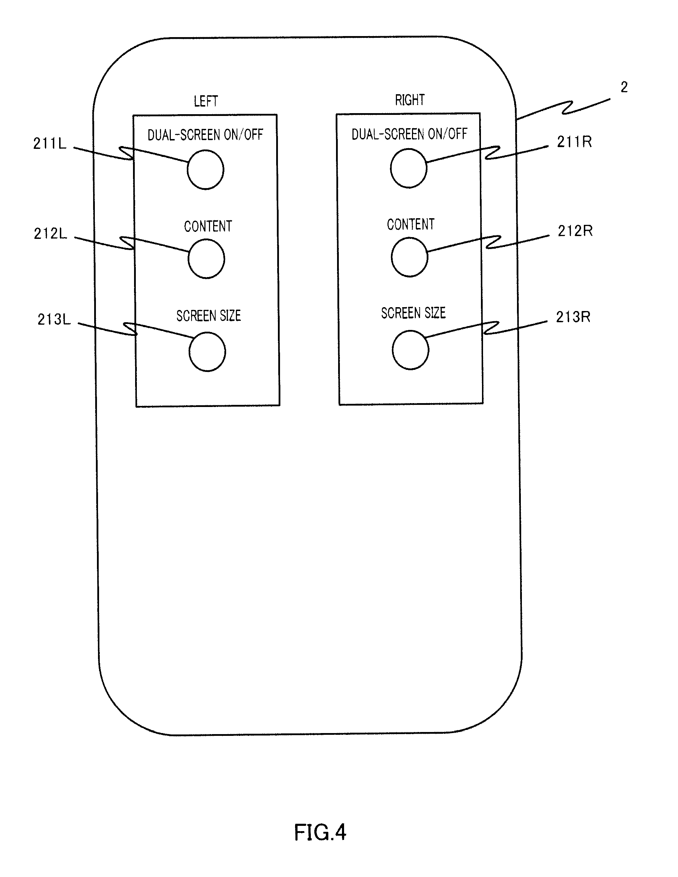

Next, the operating section 21 of the remote controller 2 in FIG.1 will be explained. FIG.4 shows a group of buttons as an example of the operating section 21. In FIG.4, the operating section 21 includes a left dual-screen on/off button 211L and a right dual-screen on/off button 211R. Both dual-screen on/off buttons 211L and 211R are the operation buttons to select whether to turn on dual-screen display (that is, to use two screens) or turn off dual-screen display (that is, to use one screen). Note that the left dual-screen on/off button 211L is used to remotely control the left screen of the two screens, and the right dual-screen on/off button 211R is used to remotely control the right screen.

The operating section 21 further includes a left content button 212L and a right content button 212R. During single-screen display, both content buttons 212L and 212R are the operation buttons to select one of a plurality of input video image signals inputted to the image display apparatus 1 of the present invention. Note that, during dual-screen display, the left content button 212L is used to switch the input video image on the left screen of the two screens, and the right content button 212R is used to switch the input image on the right screen.

The operating section 21 further includes a left-screen size button 213L and a right-screen size button 213R. Both screen-size buttons 213L and 213R are the operation buttons to select the screen size (see table 1) for display content during single-screen display. During dual-screen display, the left-screen size button 213L is the operation button to select the screen size (see table 2) for content displayed on the left-side screen, and the right-screen size button 213R is the operation button to select the screen size of the right-side screen.

The left dual-screen on/off button 211L, left content button 212L and left-screen size button 213L included in the above operating section 21 are typically operated by a viewer viewing the left-side screen of the display section 12, and the rest of the buttons 211R, 212R and 213R are typically operated by other viewers viewing the right-side screen.

Next, the operation of the image display apparatus I will be explained. As long as the control command is not received from the controlling section 14, the image processing section 11 applies the same signal processing to input video image signals at all times and supplies processed video image signals to the display section 12. The display section 12 displays video image signals from the image processing section 11.

The controlling section 14 having a real-time operating system, holds a plurality of state variables and, according to a parameter of a state variable, periodically issues to the image processing section 11 a control command by interruption processing that occurs at a timing of a vertical synchronizing signal of a video image signal. When viewers operate the operating section 21 of the remote controller 2, an event occurs, and a parameter of a state variable that needs to be changed as the details of processing the event changes.

Without changing the parameter, the state variable that does not change as the details of processing an event is issued as a control command to the image processing section 11 at the timing of the next vertical synthesizing signal.

The controlling section 14 transmits a control start command prior to sending the control command, then transmits a plurality of control commands to the image processing section 11 and transmits a control end command.

The image processing section 11 accumulates input video image signals in the memory (not shown), collectively processes control commands including the control start command and control end command received from the controlling section 14, executes these control commands at the timing of the next vertical synchronizing signal after the control end command is received and sends the video image signal to the display section 12.

By this means, even if signal processing is changed by the operation by the viewer, the display section 12 displays video images free of synchronization disturbance.

Further, if a situation takes place where a plurality of events occur during a timing of a vertical synchronizing signal and a timing of the next vertical synchronizing signal and the same state variable changes, the state variable changed in the last event is adopted.

The processing performed at the timing of this vertical synchronizing signal is of no interest with the present invention and therefore explanation thereof will be omitted, and the present invention will be explained by assuming that a display on the display section 12 changes when the state variable in the controlling section 14 changes.

Next, the operation in response to operations by the viewers will be explained using the accompanying drawings.

First, when the viewer operates the operating section 21 of the remote controller 2 in FIG.1, that is, when the viewer presses one of the buttons of the remote controller 2 in FIG.4 towards the image display apparatus 1, the operating section 21 of the remote controller 2 in FIG.1 produces a command code associated with the pressed button and the transmitting section 22 transmits the command code to the image display apparatus 1.

In the image display apparatus 1, the receiving section 13 receives the command from the remote controller 2, and extracts and notifies the command code to the controlling section 14.

The controlling section 14 processes the command code as an event depending on the current state, and notifies the required control commands to the image processing section 11.

The image processing section 11 changes the video image signal processing with respect to input video image signals to signal processing based on the control commands from the controlling section 14, and sends the processed video image signals to the display section 12.

In this way, it is possible to change the display state of the display section 12 by the operation by viewers.

By the operation of the remote controller 2 by the viewers, the image display apparatus 1 of the present invention can switch between single-screen display and dual-screen display, switch between input video image signals (hereinafter "contents") and switch between screen sizes.

The following table 3 shows state variable names held in the controlling section 14 and adoptable parameters for the controlling section 14. The shaded portions in table 3 show default parameters when the image display apparatus 1 is activated.

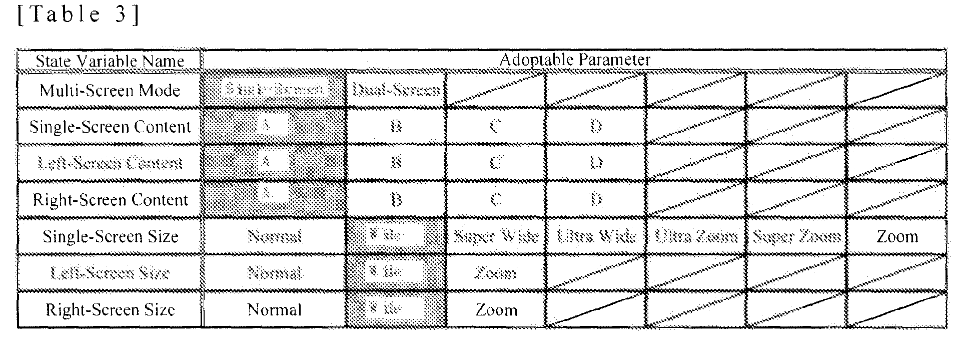

"Multi-screen mode" is a state variable indicating whether to select single-screen or dual-screen in the screen of the display section 12, and adoptable parameters are single-screen and dual-screen.

"Single-screen content" is a state variable representing input video image content during single-screen display, left-screen content is a state variable representing the input video image content on the left screen during dual-screen display and right-screen content is a state variable of the right screen representing input video image content during dual-screen display. Adoptable parameters in single-screen content, left-screen content and right-screen content are A, B, C and D, which are the same as the kinds of the input video image content.

Further, "single-screen size" is a state variable representing the screen size during single-screen display, and there are seven screen sizes of normal, wide, super wide, ultra wide, ultra zoom, super zoom and zoom, as shown in table 1.

"Left-screen size" is a state variable representing the screen size of the left screen during dual-screen display, and "right-screen size" is a state variable representing the screen size of the right screen during dual-screen display. The adoptable parameters in the left-screen size and right-screen size include three parameters of normal, wide and zoom, as shown in table 2.

Next, a screen transition and a control flow when each operation button is pressed, will be explained using the accompanying drawings.

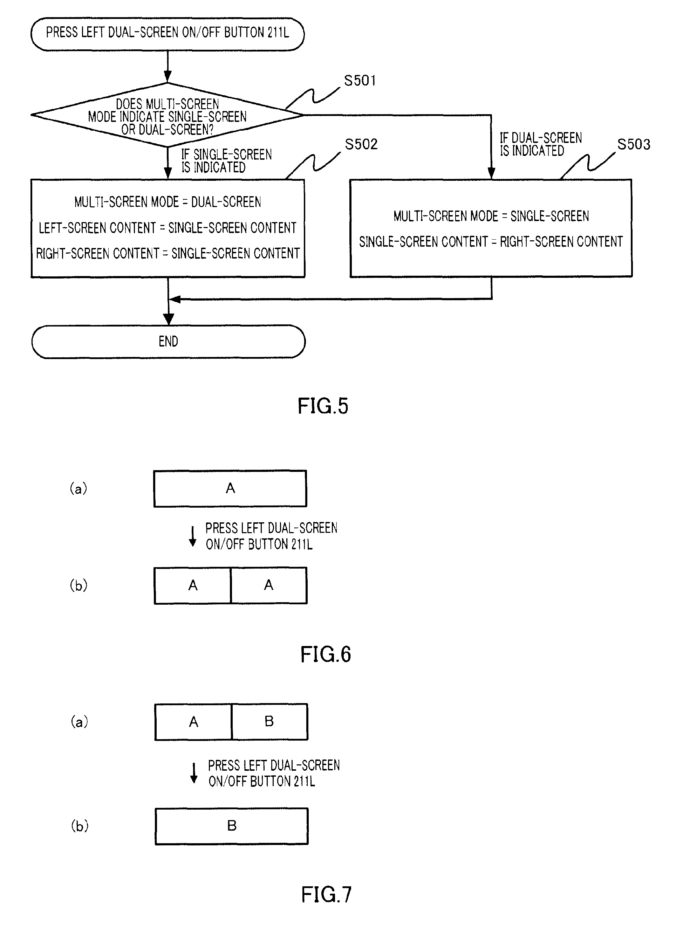

Fig.5 is a flowchart showing the operation of the image display apparatus 1 in case where the left dual-screen on/off button 211L of the remote controller 2 is pressed, FIG.6 is a schematic diagram showing a screen transition in case where single-screen setup is employed before the left dual-screen on/off button 211L is pressed and FIG.7 is a schematic diagram showing a screen transition in case where dual-screen setup is employed before the left dual-screen on/off button 211L is pressed.

If the viewer presses the left dual-screen on/off button 211L, as shown in FIG. 5, in step S501, the controlling section 14 decides whether the state variable for multi-screen mode that is currently set indicates single-screen or dual-screen.

If multi-screen mode is decided to indicate single-screen in step S501, the step proceeds to step 502, the state variable for multi-screen mode changes to the parameter of the state variable for dual-screen, and the state variable for left-screen content and the state variable for right-screen content change to the parameters of the state variable for single-screen content.

By contrast with this, if multi-screen mode is decided to indicate dual-screen in step S501, the step proceeds to step S503, the state variable for multi-screen mode changes to the parameter of single-screen and the state variable for single-screen content changes to the parameter of right-screen content.

According to processing shown in FIG. 5, a screen transition in case of single-screen is carried out by dividing the screen from one screen to two screens and displaying single-screen content before the transition, on both the left screen and the right screen. With the example of FIG.6, single-screen content before the transition is content A (see FIG.6 (a)), and therefore content A is displayed on both the left screen and the right screen of the display section 12 after the switch (see FIG.6 (b)).

By contrast with this, as to a screen transition in case where multi-screen mode is decided to indicate dual-screen in step S501, as shown in FIG.7, the display section 12 switches from dual-screen to single-screen and right-screen content before the transition is displayed by single-screen display. With the example of FIG.7, content B is displayed on the right screen before the transition (see FIG.7 (a)), and therefore content B is displayed by single-screen display after the switch (see FIG.7 (b)).

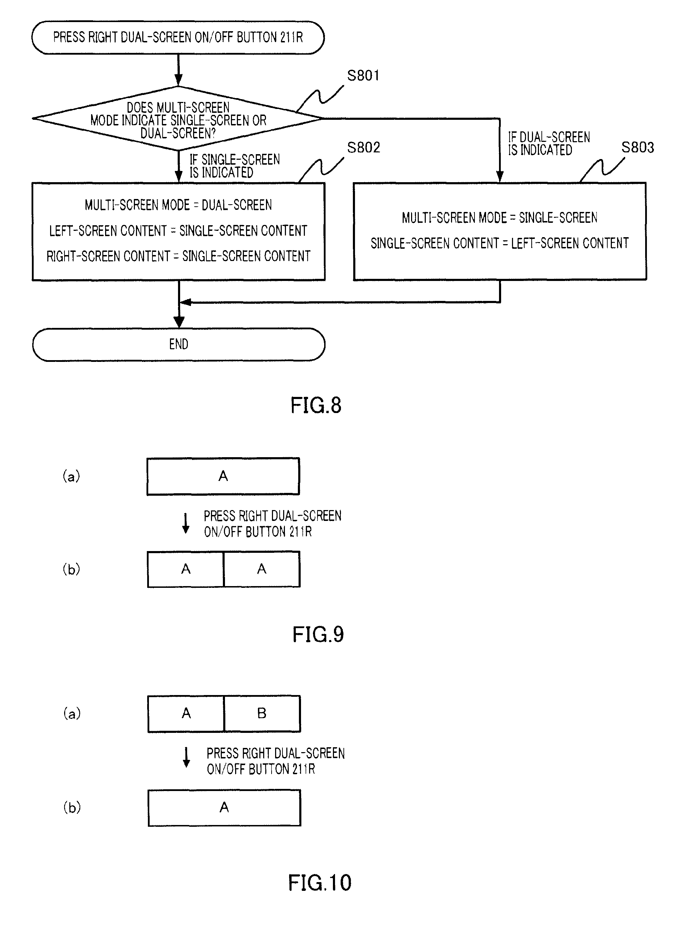

FIG.8 is a flowchart showing the operation of the image display apparatus 1 in case where the right dual-screen on/off button 211R of the remote controller 2 is pressed, FIG.9 shows a screen transition in case where single-screen setup is employed before the right dual-screen on/off button 211R is pressed, and FIG.10 is a schematic diagram indicating a screen transition in case where dual-screen setup is employed before the right dual-screen on/off button 211R is pressed.

If the viewer presses the right dual-screen on/off button 211R, as shown in FIG.8, in step S801, whether multi-screen mode indicates single-screen or dual-screen is decided.

If multi-screen mode is decided to indicate single-screen in step S801, the step proceeds to step S802, the state variable for multi-screen mode changes to the parameter of dual-screen and the state variables for left-screen content and right-screen content change to the parameters of single-screen content.

By contrast with this, if multi-screen mode is decided to indicate dual-screen in step S801, the step proceeds to step S803, the variable state for multi-screen mode changes to the parameter of the state variable for single-screen, and the state variable for single-screen content changes to the parameter of the state variable for left-screen content.

According to processing shown in FIG.8, a screen transition in case where multi-screen mode is decided to indicate single-screen in step S801 is carried out as shown in FIG.9 by dividing the screen of the display section 12 from one screen to two screens and displaying single-screen content before the switch, on both the left screen and right screen. With the example of FIG.9, content A is displayed by single-screen display before a transition (see FIG.9 (a)), and therefore content A is displayed on both the left screen and right screen after the transition (see FIG.9 (b)).

By contrast with this, a screen transition in case where multi-screen mode is decided to indicate dual-screen in step S801 is carried out as shown in FIG.10 by switching the screen of the display section 12 from dual-screen to single-screen and displaying left-screen content before the transition by single-screen display. With the example of FIG.10, content A is displayed on the left screen before a transition (see FIG.10 (a)), and therefore content A is displayed by single-screen display after the transition (see FIG.10 (b)).

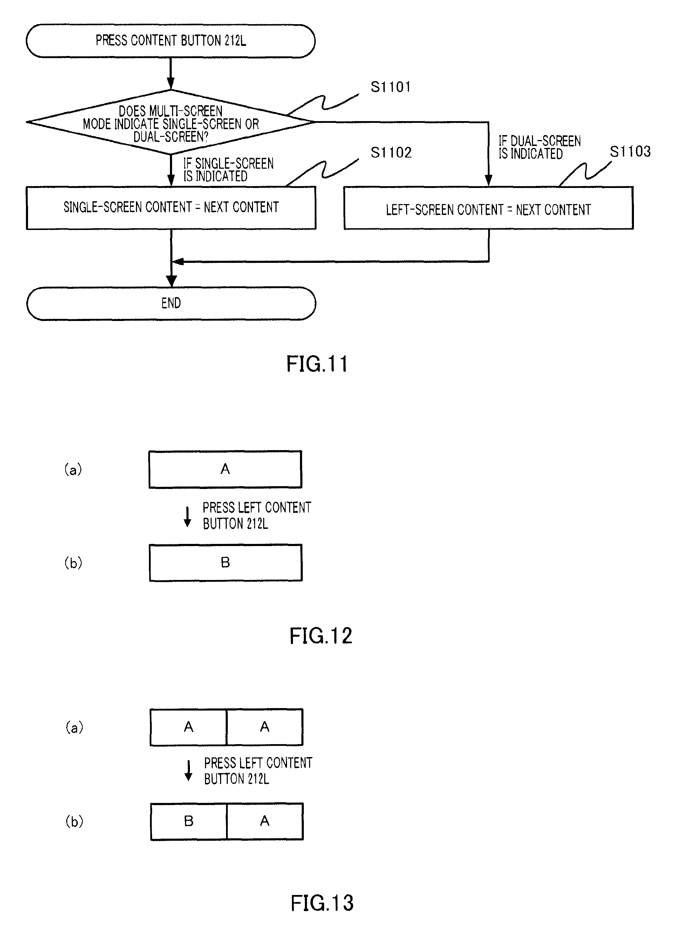

FIG.11 is a flowchart showing the operation of the image display apparatus 1 in case where the left content button 212L of the remote controller 2 is pressed, FIG.12 is a schematic diagram showing a screen transition in case where single-screen setup is employed before the left content button 212L is pressed and FIG.13 is a schematic diagram showing a screen transition in case where dual-screen setup is employed before the left content button 212L is pressed.

If the viewer presses the left content button 212L, as shown in FIG.11, in step S1101, the controlling section 14 decides whether the state variable for multi-screen mode that is currently set indicates single-screen or dual-screen.

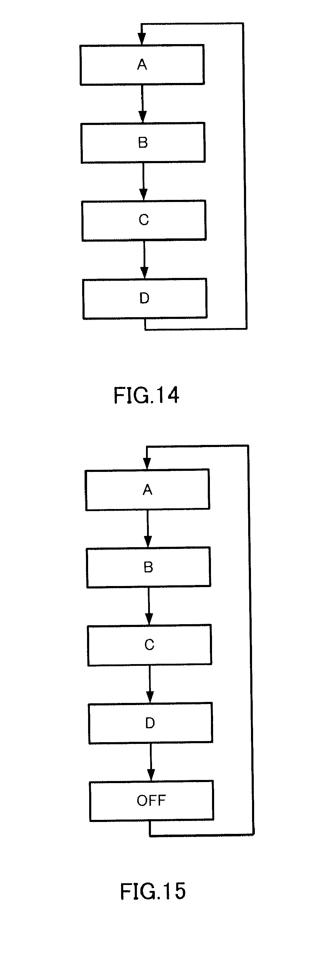

If multi-screen mode is decided to indicate single-screen in step S1101, the step proceeds to step S 1 1 02 and the controlling section 14 changes the state variable for single-screen content to the parameter indicating the next content. As shown in FIG.14, if content before the change is content A, a change to the next content is carried out sequentially from content A to content B, content B to content C, and content C to content D, and content D returns to content A.

Further, as shown in FIG.15, with the change to the next content, "OFF" in which no video signal is displayed may be provided before content D switches to content A. That is, content D changes to OFF and OFF changes to return back to content A. In this case, the adoptable parameters of state variables are as shown in following table 4 instead of table 3 shown above.

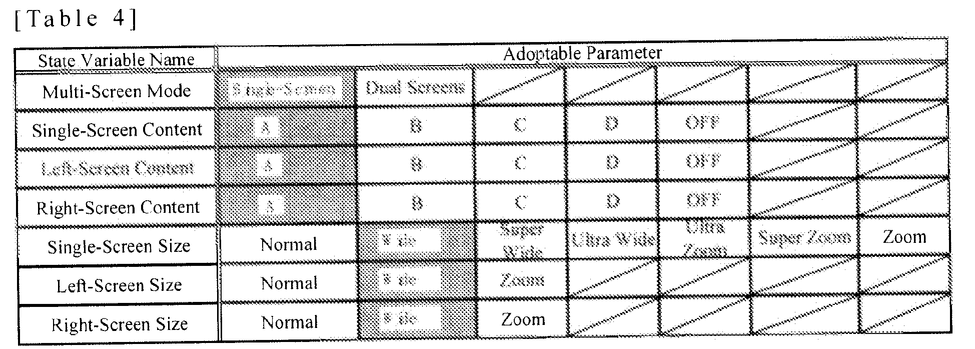

FIG.11 will be referred again. If multi-screen mode is decided to indicate dual-screen in above step S1101, the step proceeds to step S1103, and the state variable for left-screen content changes to the next content. This change to the next content this time is as shown in FIG.14 or FIG.15.

According to processing in FIG.11, if multi-screen mode is decided to indicate single-screen in step S1101, a screen transition is carried out as shown in FIG.12 such that, while single-screen display is maintained, content that was displayed before the transition changes to the next content and the next content is displayed. With the example of FIG.12, content A was displayed before the transition (see FIG.12 (a)), and therefore content B is displayed after the transition (see FIG.12 (b)).

Further, if multi-screen mode is decided to indicate dual-screen in step S1101, a screen transition is carried out as shown in FIG.13 such that, while dual-screen display is maintained, content that was displayed on the left screen before the transition changes to the next content and the next content is displayed and the display content on the right screen does not change. With the example of FIG.13, content A is displayed on the left screen before the transition (see FIG.13 (a)), and therefore content B is displayed on the left screen after the transition, and content A displayed on the right screen does not change (see FIG.13 (b)).

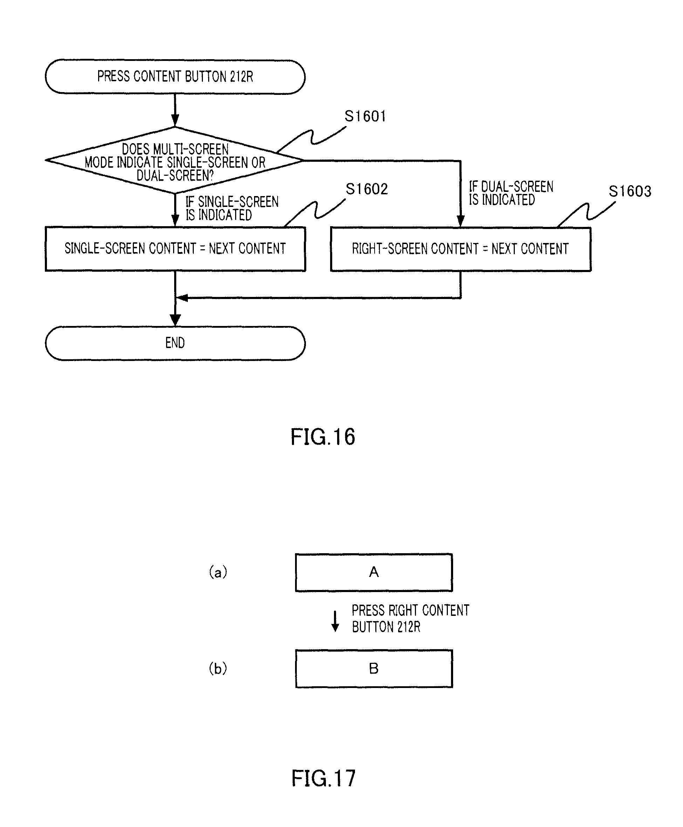

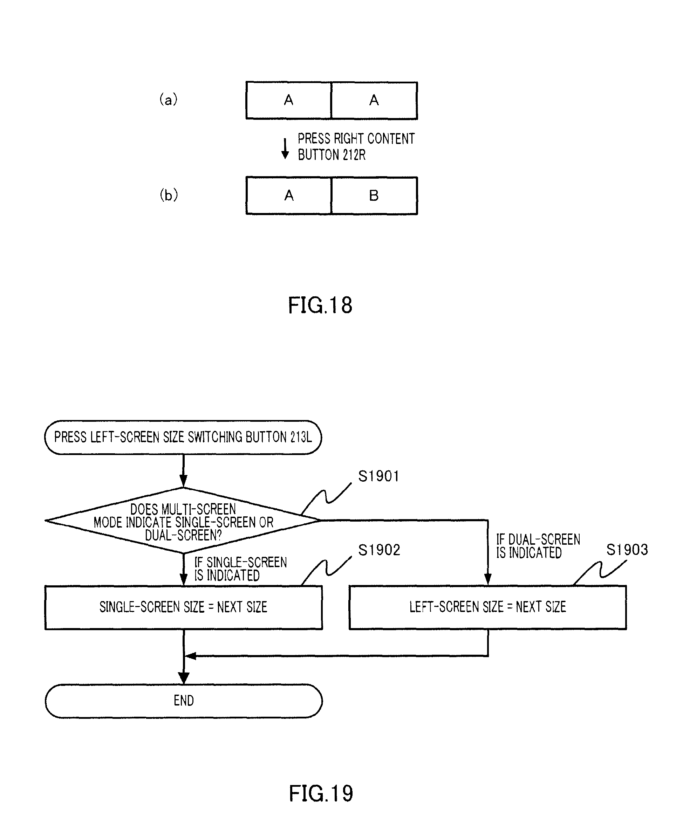

FIG.16 is a flowchart showing the operation of the image display apparatus 1 in case where the right content button 212R of the remote controller 2 is pressed, FIG.17 is a schematic diagram showing a screen transition in case where single-screen setup is employed before the right content button 212R is pressed and FIG.18 is a schematic diagram showing a screen transition in case where dual-screen setup is employed before the right content button 212R is pressed.

If the viewer presses the left content button 212R, as shown in FIG.16, in step 51601, the controlling section 14 decides whether the state variable for multi-screen mode that is currently set indicates single-screen or dual-screen.

If multi-screen mode is decided to indicate single-screen in step S1601, the step proceeds to step S1602 and the state variable for single-screen content changes to the next content. The change to the next content this time is as shown in FIG.14 or FIG.15.

By contrast with this, if multi-screen mode is decided to indicate dual-screen in step S1601, the step proceeds to step S1603 and the state variable for right-screen content changes to the next content according to the method shown in FIG.14 or FIG.15.

According to processing in FIG.16, if multi-screen mode is decided to indicate single-screen in step S1601, a screen transition is carried out as shown in FIG.17 such that, while single-screen display is maintained, content that was displayed by single-screen display before the transition changes to the next content and the next content is displayed. With the example of FIG.17, content A was displayed by single-screen display before the transition (see FIG.17 (a)), and therefore content B is displayed after the transition (see FIG, 17 (b)).

By contrast with this, if multi-screen mode is decided to indicate dual-screen in step S1601, a screen transition is carried out as shown in FIG.18 such that, while dual-screen display is maintained, content that was displayed on the right screen before the transition changes to the next content and the next content is displayed, and the content that was displayed on the left screen does not change before and after the transition. With the example of FIG.18, content A was displayed on the right screen before the transition (see FIG.18 (a)), and therefore content B is displayed on the right screen after the transition and content A is still displayed on the left screen before and after the transition.

As explained above, according to the present embodiment, while one content is displayed by single-screen display, if, for example, the viewer wants to display another content on the right-side screen, the viewer first operates the right dual-screen on/off button 211R and then operates the right content button 212R. By this means, the display section 12 changes from the state where one content is displayed by single-screen display as shown in, for example, FIG.9 (a) to the state where the same content is displayed by dual-screen display on the right-side and left-side screens as shown in FIG.9 (b) in response to the operation of the right dual-screen on/off button 211R. Further, FIG.9 (b) and FIG.18 (a) are the same. In case where content is displayed by dual-screen display on the right-side and left-side screens, content displayed on the right-side screen changes as shown in FIG.18 (b) in response to the operation by the right content button 212R.

These will be explained by the following perspective. That is, if, in response to the operation by a viewer viewing the right-side screen, the state where one content is displayed by single-screen display transitions directly to the state where two contents are displayed by dual-screen display, viewers viewing the left-side screen who may not know that the viewer viewing the right-side screen has operated the right dual-screen on/off button 211R may not understand what happened, and be confused. However, with the screen transition of the above embodiment, content display on the screen is transitioned gradually in steps from "displaying one content by single-screen display," "displaying the same content on both screens" to "displaying different contents by dual-screen display," so that it is possible to reduce second viewers' confusion.

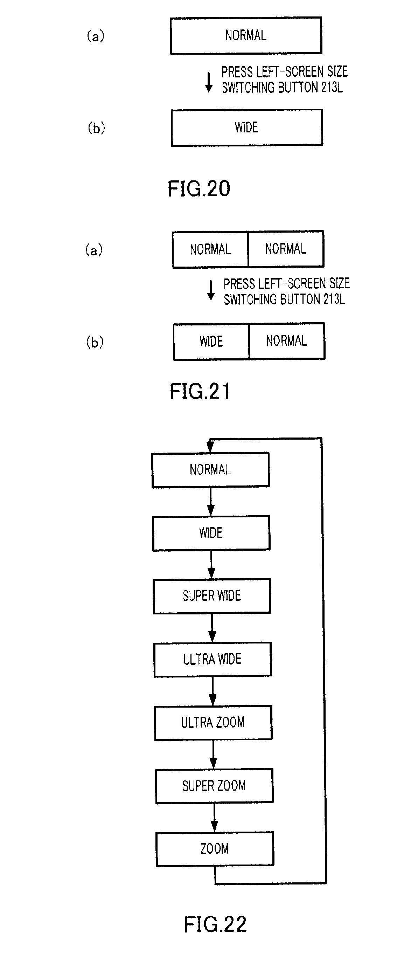

FIG.19 is a flowchart showing the operation of the image display apparatus 1 in case where the left-screen size switching button 213L of the remote controller 2 is pressed, FIG.20 is a schematic diagram showing a screen transition in case where single-screen setup is employed before the left-screen size switching button 213L is pressed and FIG.21 is a schematic diagram showing a screen transition in case where dual-screen setup is employed before the left-screen size switching button 213L is pressed.

If the viewer presses the left-screen size switching buttons 213L, as shown in FIG.19, in step S1901, the controlling section 14 decides whether or not the state variable for multi-screen mode that is currently set indicates single-screen or dual-screen.

If multi-screen mode is decided to indicate single-screen in step S1901, the step proceeds to step S1902 and the controlling section 14 changes the state variable for single-screen content to the parameter indicating the next size. As shown in FIG.22, in case where the screen size before the change is normal, the change to the next size in case of single-screen is carried out sequentially from normal to wide, wide to super wide, super wide to ultra wide, ultra wide to ultra zoom, ultra zoom to super zoom and super zoom to zoom, and zoom returns back to normal.

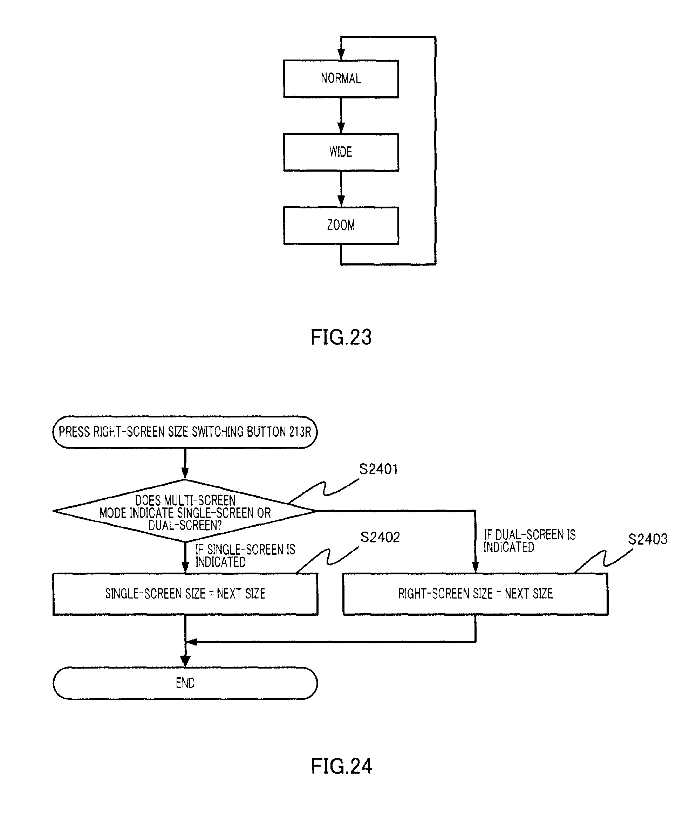

Back to FIG.19, if multi-screen mode is decided to indicate dual-screen in step S1901, the step proceeds to step S1903 and the controlling section 14 changes the state variable for the left-screen size to the parameter indicating the next size. As shown in FIG.23, in case where the screen size before the change is normal, the change to the next size in case of dual-screen is carried out sequentially from normal to wide, and wide to zoom, and zoom returns back to normal.

According to processing in FIG.19, if multi-screen display is decided to indicate single-screen in step S1901, a screen transition is carried out as shown in FIG.20 such that, while single-screen display is maintained, the screen size before the transition changes to the next screen size according to the order defined in FIG.22. Further, with the example of FIG.20, the screen size before the transition is normal (see FIG.20 (a)), and therefore the screen size is wide after the transition (see FIG.20 (b)).

By contrast with this, if multi-screen mode is decided to indicate dual-screen in step S1901, a screen transition is carried out as shown in FIG.21 such that, while dual-screen display is maintained, the screen size of the left screen before the transition changes to the next screen size according to the order defined in FIG.23. Further, the left-screen size switching button 213L is operated this time, and therefore the screen size of the right screen does not change. Further, with the example of FIG.21, the screen size of the left screen before the transition is normal (see FIG.21 (a)), and therefore the screen size of the left screen is wide after the transition (see FIG.21 (b)). By contrast with this, before and after the transition, the screen size of the right screen is normal and does not change.

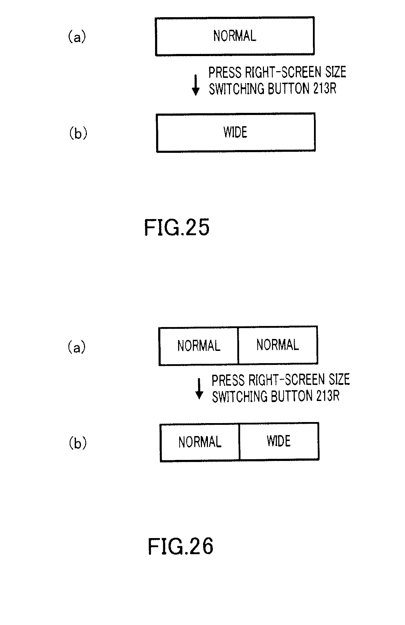

FIG.24 is a flowchart showing the operation of the image display apparatus in case where the right-screen size switching button 213R of the remote controller 2 is pressed, FIG.25 is a schematic diagram showing a screen transition in case where single-screen setup is employed before the right-screen size switching button 213R is pressed and FIG.26 is a schematic diagram showing a screen transition in case where dual-screen setup is employed before the right-screen size switching button 213R is pressed.

If the viewer presses the right-screen size switching buttons 213R, as shown in FIG.24, in step S2401, the controlling section 14 decides whether or not the state variable for multi-screen mode that is currently set indicates single-screen or dual-screen.

If multi-screen mode is decided to indicate single-screen in step S2401, the step proceeds to step S2402 and the controlling section 14 changes the state variable for single-screen content to the parameter indicating the next size. The change to the next size in case of single-screen is as explained with reference to FIG.22.

By contrast with this, if multi-screen mode is decided to indicate dual-screen in step S2401 of FIG.24, the step proceeds to step S2403 and the controlling section 14 changes the state variable for the right-screen size to the parameter indicating the next size. The change to the next size in case of dual-screen is as explained with reference to FIG.23.

According to processing in FIG.24, if multi-screen mode is decided to indicate single-screen in step S2401, a screen transition is carried out as shown in FIG.25 such that, while single-screen display is maintained, the screen size before the transition changes to the next screen size according to the order defined in FIG.22. Further, with the example of FIG.25, the screen size before the transition is normal (see FIG.25 (a)), and therefore the screen size is wide after the transition (see FIG.25 (b)).

By contrast with this, if multi-screen mode is decided to indicate dual-screen in step S2401, a screen transition is carried out as shown in FIG.26 such that, while dual-screen display is maintained, the screen size of the right screen before the transition changes to the next screen size according to the order defined in FIG.23. Further, the right-screen size switching button 213R is operated this time, and therefore the screen size of the left screen does not change. Further, with the example of FIG.26, the screen size of the right screen before the transition is normal (see FIG.26 (a)), and therefore the screen size of the right screen is wide after the transition (see FIG.26 (b)). By contrast with this, before and after the transition, the screen size of the left screen is normal and does not change.

As explained above, during single-screen display, according to the present embodiment, the controlling section 14 receives operation commands from left buttons 211L, 212L and 213L and operation commands from right buttons 211R, 212R and 213R, and gives the instruction to follow each operation command, to the image processing section 11. That is, during single-screen display, a plurality of viewers have an equal right to operate the screen. By contrast with this, during dual-screen display, the instructions with respect to the left-side screen are given according to operation commands from left buttons 211L, 212L and 213L, and instructions with respect to the right-side screen are given according to operation commands from right buttons 211R, 212R and 213R. That is, during dual-screen display, a viewer has a right to operate only the screen assigned to that viewer. Consequently, it is possible to provide the image display apparatus 1 that can provide the operations to support various viewing environments to viewers.

The disclosure of Japanese Patent Application No.2007-175823, filed on July 4, 2007, including the specification, drawings and abstract, is incorporated herein by reference in its entirety.

### Industrial Applicability

The image display apparatus according to the present invention is useful as the image display apparatus that can provide the operations to support various viewing environments to viewers.

## Claims

1. An image display apparatus comprising:
a display section that displays single content by single-screen display for at least two viewers or displays one of two different contents by dual-screen display for each viewers; and
a controlling section that, during the single-screen display, when each viewer operates a button for each viewer, gives a command for video image processing for the single content that is currently displayed on the display section, and, during the dual-screen display, when each viewer operates a button for each of the viewers, gives a command for video image processing limited to one of the two contents that is currently displayed for the viewer that has operated the button.

2. The image display apparatus according to claim 1, wherein the video image processing involves at least one of changing a screen size and changing content to be displayed on the display section.

3. The image display apparatus according to claim 1, wherein:
the video image processing involves changing a screen size; and
the controlling section gives a command to change the screen size to a screen size selected from screen sizes of a first kind during the single-screen display, and gives a command to change the screen size to a screen size selected from screen sizes of a second kind during the second-screen display, a number of the screen sizes of the first kind being greater than a number of the screen sizes of the second kind.

4. The image display apparatus according to claim 1, wherein buttons for each of the first viewer and the second viewer are arranged in a remote controller shared by the first viewer and the second viewer.
